# EUROPÄISCHE PATENTSCHRIFT

(11) **EP 0 849 867 B1**
(45) Veröffentlichungstag und Bekanntmachung des Hinweises auf die Patenterteilung: **12.02.2003**
(21) Anmeldenummer: 97119186.1
(22) Anmeldetag: 03.11.1997
(51) Int. Cl.: H02K 37/00

(54) **Schrittmotor sowie Verwendung**
Stepping motor and its application
Moteur pas-à-pas et son utilisation

(30) Priorität: 21.12.1996 DE 19653833
(43) Veröffentlichungstag der Anmeldung: 24.06.1998
(73) Patentinhaber: Tesat-Spacecom GmbH & Co. KG, 71522 Backnang (DE)
(72) Erfinder: Hettlage, Eckart, 76229 Karlsruhe (DE)
(74) Vertreter: Schuster, Gregor, Dipl.-Ing.

(56) Entgegenhaltungen:
- DE-A- 1 817 369
- DE-C- 4 241 966
- US-A- 3 479 539
- PATENT ABSTRACTS OF JAPAN vol. 7, no. 178 (E-191) [1323] , 6.August 1983 & JP 58 083576 A (COPAL K.K.), 19.Mai 1983
- PATENT ABSTRACTS OF JAPAN vol. 13, no. 18 (E-704), 17.Januar 1989 & JP 63 224659 A (JAPAN SERVO CO LTD), 19.September 1988

## Beschreibung

### Stand der Technik

Die Erfindung betrifft einen Schrittmotor mit mindestens einer Erregerwicklung, einen Stator mit auf seinem Außenumfang verteilten Polen und einem Rotor, der eine Mehrzahl von Rotorsegmenten aufweist, die zusamen mit den Statorpolen bei Erregung jeweils einen Magnetkreis schließen.

Die JP-A-58083576 offenbart einen derartigen Schrittmotor.

Schrittmotoren bestehen insbesondere aus einem weichmagnetischen topfartigen Stator, welcher eine Erregerwicklung einschließt. Auf dem Umfang des Topfes sind Statorpole angeordnet. Stator und Rotor sind bezüglich ihrer Mittelachse koaxial zueinander gelagert, so daß ein Luftspalt zwischen Rotor und Stator entsteht. Aus der DE 42 41 966 C1 ist ein Schrittmotor mit einem Scheibensystem bekannt.

### Vorteile der Erfindung

Der Schrittmotor gemäß Anspruch 1 ermöglicht, daß der Rotor während der Bestromung der Erregungwicklung weit über die Mitte zwischen seiner Ausgangslage und der nächsten Raststellung dreht. Bisherige Lösungen, insbesondere mit Einspulenantrieb, erreichen während der Bestromung genau eine Mittelstellung zwischen Ausgangslage und nächster Raststellung. Um von dieser insbesondere instabilen Mittelstellung sicher in die nächste Raststellung zu kommen, benötigen bisherige Lösungen ein abstoßendes Magnetpaar, welches kurz vor der Mittelstellung angeordnet ist. Der Schrittmotor nach der Erfindung bewegt den Rotor so nahe an die nächste Raststellung heran, daß ein Einrasten in dieser Stellung nach Abschalten des Stromes für Erregerwicklung sicher ist.

Wird der Schrittmotor nach Erfindung für einen Hochfrequenzschalter, insbesondere für einen Hohlleiterschalter mit Einspulenantrieb, verwendet, verkürzt sich die Schaltzeit, weil noch während der Bestromung der nächste HF-Pfad schon geschlossen wird. Bei bisherigen Schaltern mit Schrittmotor trat eine undefinierte Mittelstellung auf, in der der HF-Schalter ohne Durchgang war mit Totalreflexion. Ein bisheriger Schalter hatte als Schaltzeit die Bestromungszeit plus Einschwingzeit.

Der Schrittmotor nach der Erfindung läßt einen möglichst rechteckförmigen Momentverlauf über dem Drehwinkel zu. Es ist auch möglich einen winkelabhängigen Momentverlauf je nach Anwendung zu erzielen. Die Erfindung kann für unterschiedliche Motorgestaltungen eingesetzt werden, z. B. für Scheibenläufer, Käfigläufer usw. Entscheidend für die Funktion ist eine Statorpolbreite, welche kleiner als die halbe Winkelsegmentbreite ist und eine variierende Rotorsegmentbreite, wobei ein Rotorsegment etwa die Statorpolbreite besitzt.

Die gestellte Aufgabe wird durch einen Schrittmotor mit den Merkmalen des Anspruchs 1 gelöst.

### Zeichnungen

Anhand der Zeichnungen werden mehrere Ausführungsbeispiele der Erfindung erläutert. Es zeigen
- Figur 1: einen aus zwei Teilen zusammensetzbaren Stator,
- Figur 2: eine Erregerspule zum Einbringen in den Rotor,
- Figur 3: einen Außenläuferrotor,
- Figur 4: einen Längsschnitt durch einen Scheibenläufer-Schrittmotor,
- Figur 5: einen Querschnitt durch den Rotor letzteren Schrittmotors,
- Figur 6-12: unterschiedliche Stellungen des Rotors in Bezug auf den Stator,
- Figur 13: einen Schrittmotor mit anders gestaltetem Stator und
- Figur 14: einen Momentenverlauf.

### Beschreibung von Ausführungsbeispielen

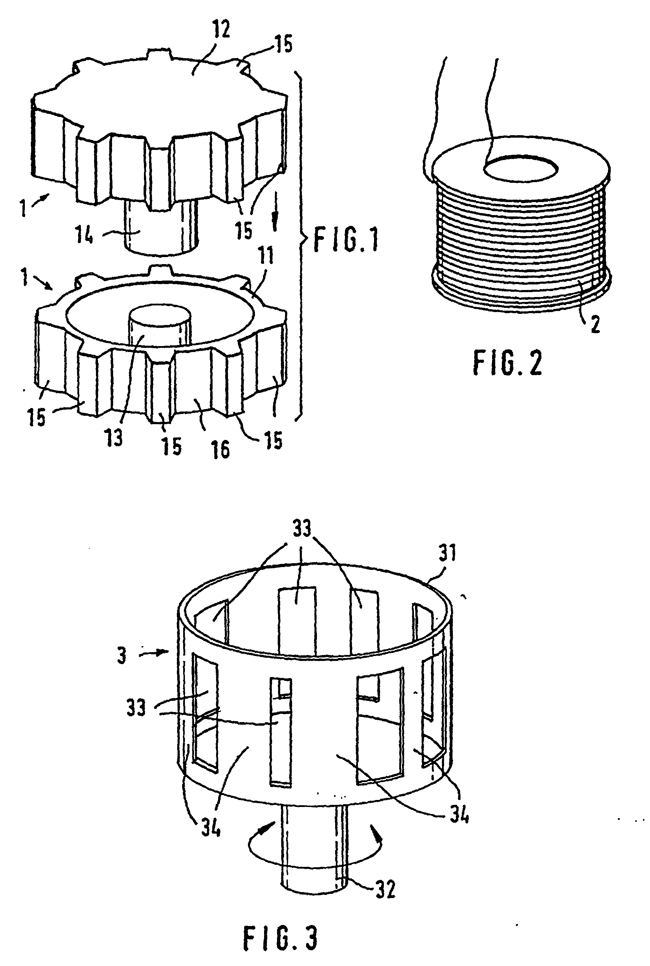

Wie Figur 1 zeigt, besteht ein Ausführungsbeispiel des Schrittmotors nach der Erfindung aus einem Stator 1, der aus zwei koaxial ineinandergreifenden topfförmigen Hohlkörpern 11 und 12 gebildet ist. Der erste Hohlkörper 11 weist einen zylinderförmigen Mittelzapfen 13 auf, der von einem zentrischen Hohlzapfen 14 des anderen Hohlkörpers 12 beim Zusammenstecken der beiden Hohlkörper umschließbar ist. Der Hohlzapfen 14 dient zur Aufnahme der Erregerwicklung 2, die als zylindrische Einspulenandordnung ausgebildet ist (Figur 2).

Am Außenumfang der Statorteile 11 und 12 ist eine Mehrzahl von n gleichbreiten Statorpolen 15 verteilt, die durch dazwischenliegende Luftspalte 16 voneinander getrennt sind. Die Polaußenflächen sind rechteckförmig ausgebildet, wobei die längeren Rechteckseiten parallel zur Mittelachse des Stators 1 verlaufen. Die Übergänge zu den Luftspalten 16 sind abgerundet, so daß ein Polgrund der Pole jeweils breiter ist als das Polende. Die Winkelbreiten der Statorpole sind untereinander gleich und jeweils kleiner als eine halbe Winkelsegmentbreite welche sich durch Teilung von 360° durch die ganze Zahl n ergibt. Bei n=8 ist ein Winkelsegment 45°.

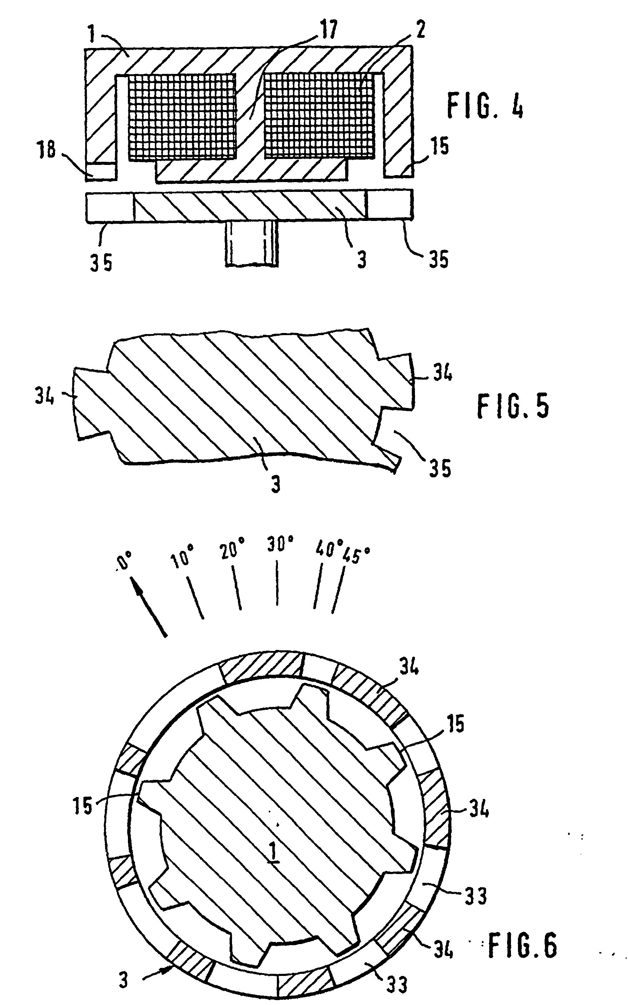

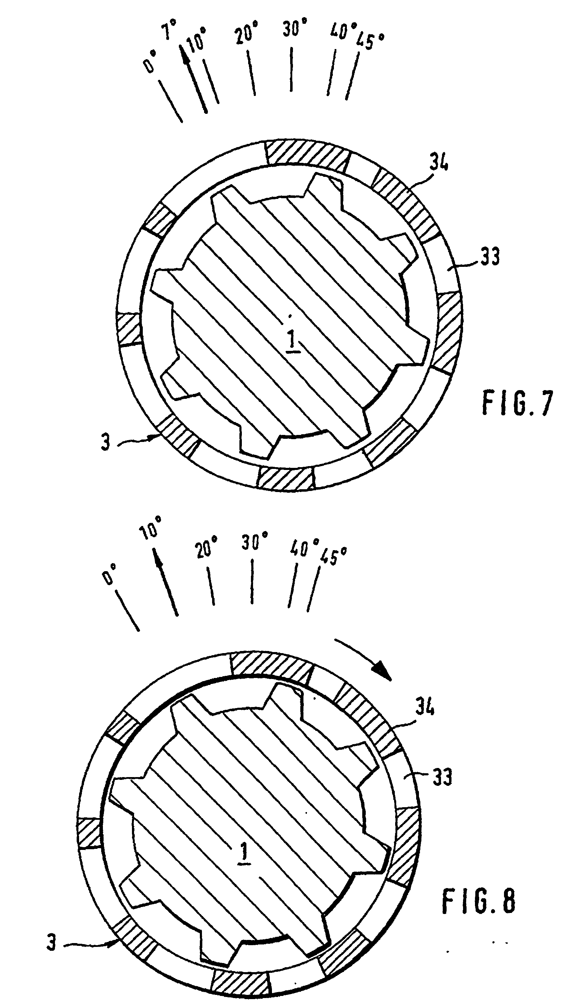

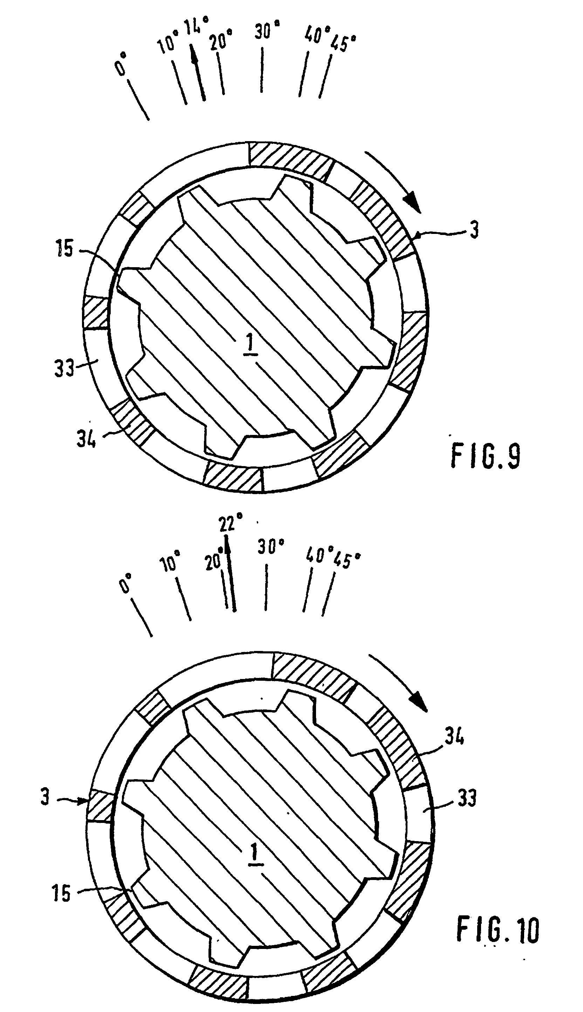

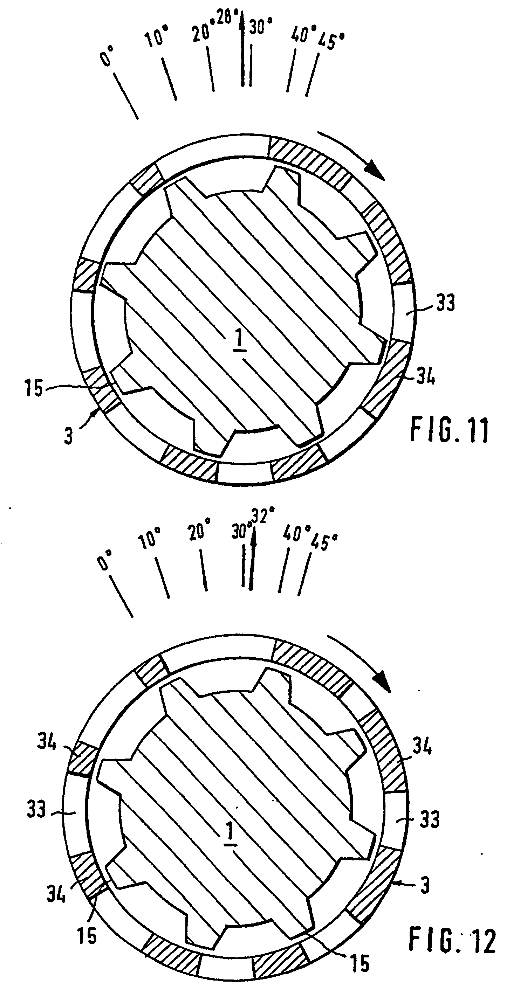

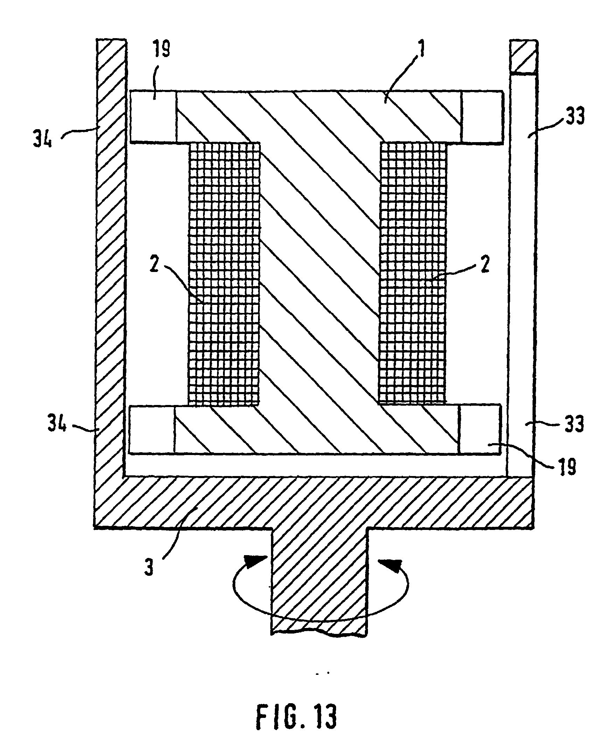

Der Rotor 3 für dieses Ausführungsbeispiel ist in Figur 3 dargestellt. Er besteht aus einem Zylindermantel 31 mit mindestens einer Deckelfläche, an der die Rotorachse 32 befestigt ist. Rotor 3 und Stator sind bezüglich einer gemeinsamen Mittelachse gelagert, so daß zwischen den Statorpolen 15 und den Rotorsegmenten 34 ein Luftspalt entsteht. Da der Rotor drehbar gelagert ist, hat das System das Bestreben, nach dem kleinsten magnetischen Widerstand bzw. nach dem Maximalwert der magnetischen Energie zu streben. Am Rotor ist also ein Moment meßbar. Im Zylindermantel des Rotors 3 sind rechteckförmige senkrechte Schlitze oder Durchbrüche 33 angeordnet, so daß dazwischen Stege, sogenannte Rotorsegmente 34, entstehen. Die Winkelbreite der einzelnen Rotorsegmente 34 ist unterschiedlich und variiert zwischen der Winkelbreite eines Statorpoles 15 und der Winkelsegmentbreite, hier 45°, abzüglich der Winkelbreite eines Statorpoles. Bei Erregung schließen die Statorpole zusammen mit den Rotorsegmenten einen Magnetkreis. Im gezeigten Ausführungsbeispiel ist die Winkelbreite der Statorpole 15 um mindestens einen Faktor größer 2 kleiner als die Winkelsegmentbreite. Für das vorgestellte Ausführungsbeispiel betragen bei einer Winkelsegmentbreite von 45° die Statorpole 8° und die Rotorsegmente variieren hier vorzugsweise kontinuierlich größer werdend in einem Bereich zwischen 8° und 33°. Der Bewegungsablauf ist in den Figuren 6 bis 12 dargestellt und zwar für die Größe eines Winkelsegmentes von 45°. Der Pfeil zeigt dabei jeweils die momentanen Stellungen des Rotors während der Drehphase. In Figur 6 ist die Nullstellung des Rotors dargestellt. Der Pfeil zeigt daher auf 0°. Figur 7 zeigt die Stellung nach der ersten Drehphase. Der Pfeil zeigt auf 7°. Nach der zweiten Drehphase ist die Stellung bei 10° (Figur 8), nach der dritten Drehphase bei 14° (Figur 9), nach der vierten Drehphase bei 22° (Figur 10), nach der fünften Drehphase bei 28° (Figur 11) und nach der sechsten Drehphase bei 32° (Figur 12). In der Stellung von Figur 12 erfolgt das Anhalten solange die Bestromung andauert. Die Hinterkante des nächsten Statorpoles fluchtet dann mit der Vorderkante des ersten Rotorsegmentes. Die Bewegung des Rotors ist natürlich kontinuierlich . Die Figuren 6 bis 12 zeigen nur Momentanbilder.

Der Antriebsrotor führt demnach bei Bestromung der Erregerwicklung mit Gleichstrom einen Schritt der Schrittweite 32° aus und verharrt in dieser Einstellung. Innerhalb eines vorgegebenen Winkelsegmentes ist die Schrittweite ca. 80 % bis zur nächsten Raststellung. Bei einem Winkelsegment von 90° beträgt die Schrittweite 72°, bei einem Winkelsegment von 45° ist die Schrittweite 36° und bei einem Winkelsegment von 360°, d. h. bei einem Vollkreis, 288°. Falls der Rotor durch eine Hilfseinrichtung, beispielsweise eine Rückstellfeder, nach der Bestromung zurück in seine Ausgangslage oder hin zur nächsten Nullstellung im nächsten Winkelsegment bewegt wird, kann der beschriebene Vorgang wiederholt werden.

Der Aufbau des Schrittmotors kann bei Beibehaltung des zuvor beschriebenen Wirkungsprinzips auch anders sein. Das Ausführungsbeispiel gemäß Figur 4 zeigt den Längsschnitt durch einen Scheibenläufer-Schrittmotor. Der Stator 1 besteht aus einem topfförmigen Hohlkörper mit einem Mittelzapfen 17 zur Aufnahme der Erregerwicklung 2. Am Mittelzapfen 17 ist in seinem Endbereich im Durchmesser erweitert, um den Magnetkreis besser zu schließen. Am Topfrand weist der Hohlkörper Einschnitte 18 auf, die die Statorpole 15 voneinander trennen. Die Winkelbreite der Statorpole sowie die Winkelbreite der entsprechenden Einschnitte kann entsprechend dem zuvor vorgestellten Ausführungsbeispiel gewählt werden. Der Rotor 3 ist hier als Läuferscheibe ausgebildet mit einem Außendurchmesser, der vorzugsweise dem Außendurchmesser des Stators 1 entspricht. Am Außenumfang weist der Rotor 3 radial verlaufende Schlitze 35 auf, die vorzugsweise genauso tief ausgebildet sind wie die Wandstärke des Statortopfes. Zwischen diesen Schlitzen 35 verbleiben Rotorsegmente, die wie beim zuvor vorgestellten Ausführungsbeispiel in ihrer Winkelbreite variieren, beispielsweise zwischen 8° und 33°.

Eine weitere Ausführungsform des Schrittmotors nach der Erfindung ist in Figur 13 dargestellt. Hier ist der Stator 1 einstückig ausgebildet. Er besteht aus einem Kreiszylinder, der in mindestens einem seiner Endbereiche 19 im Durchmesser vergrößert ist. Hier sind beide Endbereiche durch Zylinderscheiben vergrößert, so daß der Stator eine Form ähnlich einer Fadenrolle aufweist. Die Zylinderscheiben sind außen gezahnt, derart, daß wie beim zuvor dargestellten Ausführungsbeispiel die Statorpole 15 entstehen. Der Rotor 3 ist wie beim Ausführungsbeispiel nach Figur 1 als ein den Stator 1 umschließender Außenläufer ausgebildet. In seiner Mantelfläche sind ebenfalls im Bereich der Statorpole 15 Schlitze oder Durchbrüche 33 vorgesehen, die die Rotorsegmente 34 voneinander trennen. Die Erregerwicklung 2 befindet sich vorzugsweise im Bereich zwischen den Zylinderscheiben symmetrisch zur Mittelachse des Stators 1.

Bei den Ausführungsformen des Rotors gemäß Figur 1 und Figur 13 können auch gleichbreite Schlitze oder Durchbrüche 33 verwendet werden. Die Variation der Winkelbreite der einzelnen Rotorsegmente 34 kann dann dadurch herbeigeführt werden, daß im Bereich der Statorpole 15 diese Schlitze oder Durchbrüche Einschnürungen variierender Breite aufweisen.

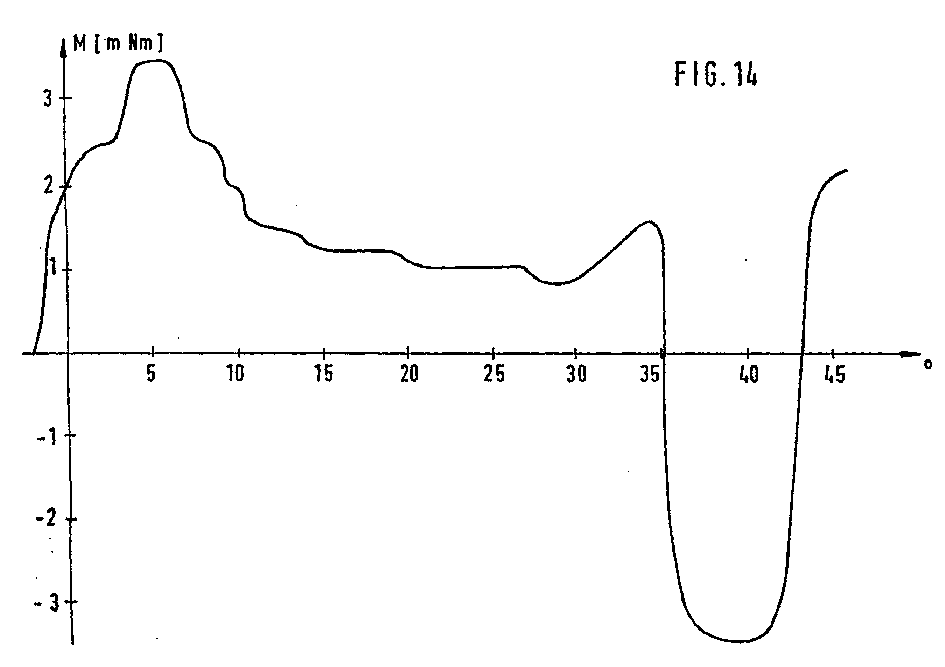

Figur 14 zeigt den Momentenverlauf M über der Schrittweite. Der breite Fangbereich im Bereich der Winkelbreiten von 35° bis 45° wird durch die erfindungsgemäße Dimensionierung der Rotorpole und Statorsegmente erreicht.

## Patentansprüche

1. Schrittmotor bestehend aus
- mindestens einer Erregerwicklung (2),
- einem Stator (1), der auf seinem Außenumfang verteilt eine Mehrzahl von Polen (15) mit dazwischenliegenden Luftspalten (16) aufweist, wobei die Winkelbreiten der Statorpole (15) untereinander gleich und jeweils kleiner sind als eine halbe Winkelsegmentbreite, wobei sich die Winkelsegmentbreite als Teilung von 360° durch eine ganze Zahl n ergibt,
- einem Rotor (3) mit einer Mehrzahl von Rotorsegmenten (34), die zusammen mit den Statorpolen (15) bei Erregung jeweils einen Magnetkreis schließen, wobei die Winkelbreite der einzelnen Rotorsegmente (34) unterschiedlich ist und variiert zwischen der Winkelbreite eines Statorpoles (15) und der Winkelsegmentbreite abzüglich der Winkelbreite eines Statorpoles (15).

2. Schrittmotor nach Anspruch 1, **dadurch gekennzeichnet, daß** der Stator (1) aus zwei topfförmigen Hohlkörpern (11, 12) mit auf ihrem Außenumfang angeordneten Statorpolen (15) besteht, daß einer dieser Hohlkörper (11) einen Mittelzapfen (13) aufweist, der von einem zentralen Hohlzapfen (14) des anderen Hohlkörpers (12) umschließbar ist, wobei letzterer insbesondere als Tragkörper für die Erregerwicklung (2) dient, und daß der Rotor (3) als Außenläufer den Stator (1) umschließt, wobei in seiner Mantelfläche Schlitze oder Durchbrüche (33) angeordnet sind, die die Rotorsegmente (34) voneinander trennen.

3. Schrittmotor nach Anspruch 1, **dadurch gekennzeichnet, daß** der Stator (1) aus einem insbesondere die Erregerwicklung (2) tragenden Zylinder besteht, der mindestens in einem seiner Endbereiche (19) im Durchmesser vergrößert ist, daß im Bereich dieser Durchmesservergrößerung/en die Statorpole (15) ausgebildet sind und daß der Rotor (3) als Außenläufer den Stator (1) umschließt, wobei in seiner Mantelfläche Schlitze oder Durchbrüche (35) angeordnet sind, die die Rotorsegmente (34) voneinander trennen.

4. Schrittmotor nach Anspruch 1, **dadurch gekennzeichnet, daß** der Stator (1) aus einem topfförmigen Hohlkörper besteht mit einem Mittelzapfen (17), insbesondere zur Aufnahme der Erregerwicklung (2), wobei der Hohlkörper an seinem Topfrand Einschnitte (18) aufweist, die die Statorpole (15) voneinander trennen, daß der Rotor (3) als Scheibenläufer ausgebildet ist, der insbesondere an seinem Außenumfang Schlitze (35) aufweist, die die Rotorsegmente (34) voneinander trennen.

5. Schrittmotor nach einem der Ansprüche 1 bis 4, **dadurch gekennzeichnet, daß** die Variation der Winkelbreite der einzelnen Rotorsegmente (34) dadurch realisiert ist, daß bei gleichbreiten Schlitzen oder Durchbrüchen (33, 35) im Bereich der Statorpole (15) Einschnürungen variierender Breite vorgesehen sind.

6. Schrittmotor nach einem der Ansprüche 1 bis 5, **dadurch gekennzeichnet, daß** die Erregerwicklung (2) als Einspulenwicklung symmetrisch zur Mittelachse des Stators (1) angeordnet ist.

7. Schrittmotor nach einem der Ansprüche 1 bis 6, **dadurch gekennzeichnet, daß** die Rotorsegmente (34) bezüglich der Statorpole (15) auf dem Umfang so verteilt sind, daß die Endlage des Rotors (3) nach einer Bestromung der Erregerwicklung (2) in der Nähe der nächsten Raststellung des Schrittmotors ist.

8. Schrittmotor nach einem der Ansprüche 1 bis 7, **dadurch gekennzeichnet, daß** die Winkelbreite der Statorpole (15) um mindestens einen Faktor größer 2 kleiner ist als die Winkelsegmentbreite.

9. Schrittmotor nach Anspruch 8, **dadurch gekennzeichnet, daß** die bei einer Winkelsegmentbreite von 45° die Winkelbreite der Statorpole (15) etwa 8° ist und die Winkelbreite der Rotorsegmente (34) zwischen etwa 8° und 33° variiert.

10. Schrittmotor nach einem der Ansprüche 1 bis 9, **dadurch gekennzeichnet, daß** eine Hilfseinrichtung vorgesehen ist, mittels derer der Rotor (3) nach einer Bestromung der Erregerwicklung (2) in seine Ausgangslage oder hin zur nächsten Ausgangslage im nächstfolgenden Winkelsegment einstellbar ist.

11. Verwendung des Schrittmotors nach einem der Ansprüche 1 bis 10 für einen Hochfrequenzschalter, insbesondere einen Hohlleiterschalter mit Einspulenantrieb.

## Claims

1. Stepped motor consisting of
- at least one exciter winding (2),
- a stator (1) having distributed on its outer circumference a number of poles (15) with air gaps (16) located between them, whereby the angle widths of the stator poles (15) are identical to each other and each is smaller than half of the width of the angle segment, whereby the width of the angle segment is derived by the division of 360° by a whole number n,
- a rotor (3) with a number of rotor segments (34) which form on excitation a magnetic circuit together with the stator poles (15), whereby the angle width of the individual rotor segments (34) varies between the angle width of a stator pole (15) and the angle segment width less the angle width of a stator pole (15).

2. Stepped motor according to Claim 1, **characterized in that** the stator (1) consists of two pot-shaped hollow bodies (11, 12) with stator poles (15) arranged on their outer circumference, that one of these hollow bodies (11) has a centre pin (13) which can be enclosed by a central hollow pin (14) of the other hollow body (12), whereby the latter serves in particular as a supporting body for the exciter winding (2), and that the rotor (3) encloses as outside rotor the stator (1), whereby in the surface of its shell are arranged slots or openings (33) which separate the rotor segments (34) from each other.

3. Stepped motor according to Claim 1, **characterized in that** the stator (1) consists of a cylinder in particular bearing the exciter winding (2) which is enlarged in diameter at least in one of its end areas (19), that the stator poles (15) are arrayed in the area of this or these diameter enlargement(s), and that the rotor (3) encloses as outside rotor the stator (1), whereby in the surface of its shell are arranged slots or openings (35) which separate the rotor segments (34) from each other.

4. Stepped motor according to Claim 1, **characterized in that** the stator (1) consists of a pot-shaped hollow body with a centre pin (17), in particular for accommodating the exciter winding (2), whereby the hollow body has cut-ins (18) on its pot edge which separate the stator poles (15) from each other, that the rotor (3) is designed as a disk rotor which has slots (35) in particular on its outer circumference which separate the rotor segments (34) from each other.

5. Stepped motor according to one of Claims 1 to 4, **characterized in that** the variation of the angle width of the individual rotor segments (34) is realised **in that** constrictions of varying width are provided in the area of the stator poles (15) with equally wide slots or openings (33, 35).

6. Stepped motor according to one of Claims 1 to 5, **characterized in that** the exciter winding (2) is arranged as a single-coil winding symmetrically to the centre axis of the stator (1).

7. Stepped motor according to one of Claims 1 to 6, **characterized in that** the rotor segments (34) are distributed on the circumference in respect of the stator poles (15) such that the final position of the rotor (3) after an energization of the exciter winding (2) is in the vicinity of the nearest rest position of the stepped motor.

8. Stepped motor according to one of Claims 1 to 7, **characterized in that** the angle width of the stator poles (15) is smaller than the angle segment width by at least a factor greater than 2.

9. Stepped motor according to Claim 8, **characterized in that** at an angle segment width of 45° the angle width of the stator poles (15) is about 8° and the angle width of the rotor segments (34) varies between about 8° and 33°.

10. Stepped motor according to one of Claims 1 to 9, **characterized in that** an auxiliary unit is provided by means of which the rotor (3) can be adjusted after the energization of the exciter winding (2) to its starting position or to the next starting position in the next angle segment.

11. Use of the stepped motor according to one of Claims 1 to 10 for a high-frequency switch, in particular a hollow conductor switch with single-coil drive.

## Revendications

1. Moteur pas à pas comprenant
- au moins un enroulement inducteur (2),
- un stator (1), qui présente un grand nombre de pôles (15) répartis sur son pourtour extérieur avec des entrefers (16) intercalés, les largeurs d'angle des pôles du stator (15) étant identiques entre elles et respectivement inférieures à une demi-largeur de segment d'angle, la largeur de segment d'angle étant obtenue par la division de 360° par un nombre entier n,
- un rotor (3) avec un grand nombre de segments de rotor (34) qui forment avec les pôles du stator (15) respectivement un cercle magnétique en cas d'excitation, la largeur d'angle des segments de rotor (34) individuels variant entre la largeur d'angle d'un pôle de stator (15) et la largeur de segment d'angle moins la largeur d'angle d'un pôle de stator (15).

2. Moteur pas à pas selon la revendication 1, **caractérisé en ce que** le stator (1) comprend deux corps creux (11, 12) en forme de pot avec des pôles de stator (15) disposés sur leur pourtour extérieur, **en ce que** l'un de ces corps creux (11) présente un pivot central (13) qui peut être entouré par un pivot creux (14) central de l'autre corps creux (12), ce dernier servant en particulier de corps support pour l'enroulement inducteur (2), et **en ce que** le rotor (3) entoure le stator (1) en tant qu'induit extérieur, des fentes ou des passages (33) étant disposés dans sa surface périphérique et séparant les segments de rotor (34) les uns des autres.

3. Moteur pas à pas selon la revendication 1, **caractérisé en ce que** le stator (1) se compose d'un cylindre portant en particulier l'enroulement inducteur (2) et dont le diamètre est agrandi au moins dans l'une de ses zones d'extrémité (19), **en ce que** les pôles de stator (15) sont agencés dans la zone de cet (ces) agrandissement(s) de diamètre et **en ce que** le rotor (3) entoure le stator (1) en tant qu'induit extérieur, des fentes ou des passages (35) étant disposés dans sa surface périphérique et séparant les segments de rotor (34) les uns des autres.

4. Moteur pas à pas selon la revendication 1, **caractérisé en ce que** le stator (1) se compose d'un corps creux en forme de pot avec un pivot central (17), en particulier pour le logement de l'enroulement inducteur (2), le corps creux présentant sur son bord de pot des encoches (18) qui séparent les pôles de stator (15) les uns des autres, **en ce que** le rotor (3) est conçu comme un entrefer plat qui présente en particulier sur son pourtour extérieur des fentes (35) qui séparent les segments de rotor (34) les uns des autres.

5. Moteur pas à pas selon l'une quelconque des revendications 1 à 4, **caractérisé en ce que** la variation de la largeur d'angle des différents segments de rotor (34) est réalisée par le fait que dans le cas de fentes ou de passages (33, 35) de même largeur, il est prévu dans la zone des pôles du stator (15) des rétrécissements de largeur variable.

6. Moteur pas à pas selon l'une quelconque des revendications 1 à 5, **caractérisé en ce que** l'enroulement inducteur (2) est disposé en tant qu'enroulement à une bobine de façon symétrique par rapport à l'axe médian du stator (1).

7. Moteur pas à pas selon l'une quelconque des revendications 1 à 6, **caractérisé en ce que** les segments de rotor (34) sont répartis à la périphérie par rapport aux pôles de stator (15) de telle sorte que la position finale du rotor (3) est à proximité de la prochaine position de verrouillage du moteur pas à pas après un passage de courant dans l'enroulement inducteur (2).

8. Moteur pas à pas selon l'une quelconque des revendications 1 à 7, **caractérisé en ce que** la largeur d'angle des pôles de stator (15) est inférieure d'au moins un facteur supérieur à 2 à la largeur de segment d'angle.

9. Moteur pas à pas selon la revendication 8, **caractérisé en ce que**, pour une largeur de segment d'angle de 45°, la largeur d'angle des pôles de stator (15) est environ 8° et la largeur d'angle des segments de rotor (34) varie entre 8° et 33°.

10. Moteur pas à pas selon l'une quelconque des revendications 1 à 9, **caractérisé en ce qu'**il! est prévu un système auxiliaire au moyen duquel le rotor (3) peut être réglé en direction de sa position de départ ou en direction de la prochaine position de départ dans le segment d'angle suivant après un passage de courant dans l'enroulement inducteur (2).

11. Utilisation du moteur pas à pas selon l'une quelconque des revendications 1 à 10 pour un interrupteur à haute fréquence, en particulier un commutateur de guide d'ondes avec entraînement à une bobine.
